# EUROPEAN PATENT APPLICATION

(11) **EP 4 825 564 A1**
(43) Date of publication of application: **21.10.2026**
(21) Application number: 24816689.4
(22) Date of filing: 12.03.2024
(51) Int. Cl.: B29C 64/245, B33Y 30/00

(54) **3D PRINTING PLATFORM AND 3D PRINTING DEVICE**

(30) Priority: 14.12.2023 CN 202311723302
(71) Applicant: BMF Nano Material Technology Co., Ltd, Shenzhen, Guangdong 518000 (CN); BMF Tech (Chongqing) Inc., Chongqing 401147 (CN)
(72) Inventor: PENG, Chong, Shenzhen, Guangdong 518000 (CN); XIE, Yunyun, Shenzhen, Guangdong 518000 (CN); YANG, Chen, Shenzhen, Guangdong 518000 (CN); FU, Liangkang, Shenzhen, Guangdong 518000 (CN); XIA, Chunguang, Shenzhen, Guangdong 518000 (CN)
(74) Representative: Agca Kizil, Tugce
(86) International application number: PCT/CN2024/081156
(87) International publication number: WO 2025/123512

(57) **Abstract**

A 3D printing platform and a 3D printing platform are provided. The 3D printing platform includes: a base; at least one support member, the support member is arranged on the base and protrudes out of a top surface of the base, and a top end of the support member forms a support surface; a build platform placed on the support surface; a platform fixing member configured to detachably connect the build platform to the base.

## Description

The present disclosure claims priority to Chinese Patent application No. 202311723302.7 entitled "3D PRINTING PLATFORM AND 3D PRINTING DEVICE" filed on Dec. 14, 2023, to the China National Intellectual Property Administration, the entire contents of which are incorporated herein by reference.

### Technical Field

The present disclosure relates to the technical field of printers, in particular to a 3D printing platform and a 3D printing device.

### Background Art

In order to avoid damage to a finished product model during operation, a 3D printing device in the related art is generally provided with a detachable build platform, and a 3D model is printed on the build platform. After printing is finished, a worker takes out the model by removing the build platform, so the worker does not need to directly contact the finished product model.

When some build platforms in the related art are installed on a support component of the 3D printing device, it is difficult to ensure the same flatness when the same or a different build platform is reinstalled on the support component. Therefore, when the build platform is not flat after being placed, it is necessary for the worker to perform leveling. If it is necessary to perform leveling once for each replacement, it undoubtedly increases the workload of the worker, which wastes time and labor, and reduces working efficiency.

### Summary of the Invention

In view of the aforementioned condition, the purpose of the present disclosure is to provide a 3D printing platform and a 3D printing device, which are convenient to use, time-saving, and labor-saving
The first aspect of the present disclosure provides a 3D printing platform , including a base, at least one support member, a build platform and a platform fixing member. The support member is arranged on the base and protrudes out of a top surface of the base, and a top end of the support member forms a support surface. The build platform is placed on the support surface. The platform fixing member is configured to detachably connect the build platform to the base.

In the 3D printing platform of the present disclosure, optionally, the 3D printing platform comprises at least two staggered support members, at least two of the support members are in line contact with the build platform, or at least two support members are in line contact and point contact with the build platform.

In the 3D printing platform of the present disclosure, optionally, the 3D printing platform comprises at least three staggered support members, at least three of the support members are in point contact with the build platform.

In the 3D printing platform of the present disclosure, optionally, each of the support members is a spherical structure.

In the 3D printing platform of the present disclosure, optionally, the 3D printing platform includes three support members, and the three support members are distributed in axial symmetry.

In the 3D printing platform of the present disclosure, optionally, the build platform is magnetically coupled with the base through a platform fixing member.

In the 3D printing platform of the present disclosure, optionally, the platform fixing member comprises a first magnet and a second magnet, the build platform is provided with at least one first magnet in both a X-axis direction and a Y-axis direction, the base is provided with at least one second magnet corresponding to the first magnet in both the X-axis direction and the Y-axis direction;
when the build platform is placed on the support surface, the first magnet is magnetically coupled with the second magnet.

In the 3D printing platform of the present disclosure, optionally, the platform fixing member further comprises a third magnet and a fourth magnet, at least one surface of the build platform in a Z-axis direction is provided with at least one third magnet, a top of the base is provided with at least one fourth magnet corresponding to the third magnet;
when the build platform is placed on the support surface, the third magnet is magnetically coupled with the fourth magnet.

In the 3D printing platform of the present disclosure, optionally, the base is provided with a groove, inner profile of the groove is matched with partial outer profile of the support member, the support member is housed in the groove .

In the 3D printing platform of the present disclosure, optionally, the groove is a conical structure, the support member can be a spherical structure.

In the 3D printing platform of the present disclosure, optionally, the 3D printing platform further comprises a limiting member, the limiting member is connected to a top of the base and is configured to fix the support member in the groove.

In the 3D printing platform of the present disclosure, optionally, the base comprises a bottom plate and at least one side plate;
one side surface of the bottom plate in the X-axis direction is connected with at least one side plate, and other side surface of the bottom plate in the Y-axis direction is connected with at least one side plate, at least one support member is arranged on a top of the bottom plate, the side plate protrudes from a top surface of the bottom plate;
the build platform is provided with at least one first magnet in both X-axis direction and Y-axis direction, at least one second magnet corresponding to the first magnet is arranged on one side of the side plate facing the bottom plate; when the build platform is placed on the support surface, the first magnet is magnetically coupled with the second magnet.

In the 3D printing platform of the present disclosure, optionally, the build platform comprises a base body first layer, and a load-bearing second layer for bearing a printed part; the load-bearing second layer is a diamond-like carbon coating.

In the 3D printing platform of the present disclosure, optionally, the build platform further includes an anti-impact third layer arranged on the base body first layer far away from one side of the load-bearing second layer, the anti-impact third layer is a diamond-like carbon coating.

The second aspect of the present disclosure provides a 3D printing device, including: a 3D printing platform as described above; a leveling mechanism configured to connect to the base; a liquid groove configured to contain liquid photosensitive material, when the build platform is located in the liquid groove, at least part of the base extends to outside of the liquid groove so as to connect to the leveling mechanism.

The 3D printing platform of the present disclosure includes a base, at least one support member, a build platform and a platform fixing member. Wherein, a top end of the support member forms a support surface, and the build platform is placed on the support surface. According to the structure, the support surface formed by the top end of at least one support member can place the build platform. Therefore, the build platform is placed above the base, after the build platform is leveled for the first time, it is unnecessary to be re-leveled when the same build platform is placed on the base again, and it can be directly used, it has high repeatability and interchangeability, making it more convenient to use, time-saving and labor-saving.

### Brief Description of the Drawings

Embodiments of the present disclosure will be described in further detail with reference to examples illustrated in the accompanying drawings, wherein:
FIG. 1 is a schematic view showing an overall structure of a 3D printing platform according to one embodiment of the present disclosure.
FIG. 2 is an exploded view showing a 3D printing platform according to one embodiment of the present disclosure.
FIG. 3 is another exploded view of a 3D printing platform according to one embodiment of the present disclosure.
FIG. 4 is another exploded view showing a 3D printing platform according to one embodiment of the present disclosure.
FIG. 5 is a side view showing a 3D printing platform according to one embodiment of the present disclosure.
FIG. 6 is a side view showing a base and a support member according to one embodiment of the present disclosure.
FIG. 7 is another exploded view showing a 3D printing platform according to one embodiment of the present disclosure.
FIG. 8 is a schematic view showing an overall structure of a 3D printing device according to one embodiment of the present disclosure.

Reference Numerals: 100, 3D printing device; 1, base; 11, groove; 12, cavity; 13, bottom plate; 14, side plate; 2, support member; 3, build platform; 4, platform fixing member; 41, first magnet; 42, second magnet; 43, third magnet; 44, fourth magnet; 5, limiting member; 6, liquid groove; 7, leveling mechanism.

### Detailed Description of Embodiments

Preferred embodiments of the present disclosure will be described in detail with reference to the accompanying drawings. In the following description, the same reference numerals are assigned to the same components, and repeated descriptions are omitted. In addition, the drawings are only schematic views, and dimensions or shapes of the components can be different from each other.

It should be noted that all directional indications (such as upper, lower, left, right, front, back, etc.) in the embodiment of the present disclosure are only used to explain the relative positions, movements, and other aspects of the components in a specific orientation. If the specific orientation is changed, the directional indication is changed correspondingly.

It should be noted that when one element is referred to as being "fixed to" or "arranged on" the other element, it may be directly or indirectly located on the other element. When one element is referred to as being "connected to" the other element, it may be directly or indirectly connected to the other element.

In addition, terms such as "first", "second" and the like in the present disclosure are only used for descriptive purposes, and should not be understood as indicating or implying relative importance or implicitly indicating the number of technical features indicated. Thus, features defined with "first" and "second" may explicitly or implicitly include at least one of the features. In addition, the technical solutions in various embodiments can be combined with each other, but it must be based on the implementation of those ordinarily skilled in the art. When the combination of the technical solutions is contradictory to each other or cannot be realized, it should be considered that the combination of the technical solutions does not exist, and is also not within the protection scope claimed in the present disclosure.

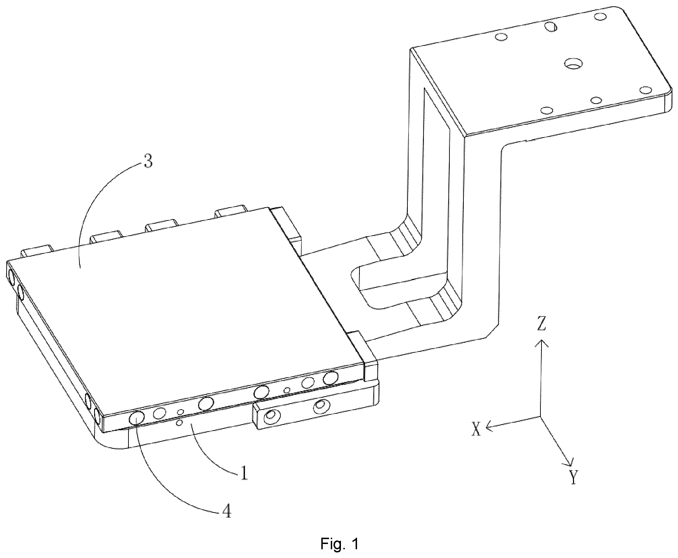

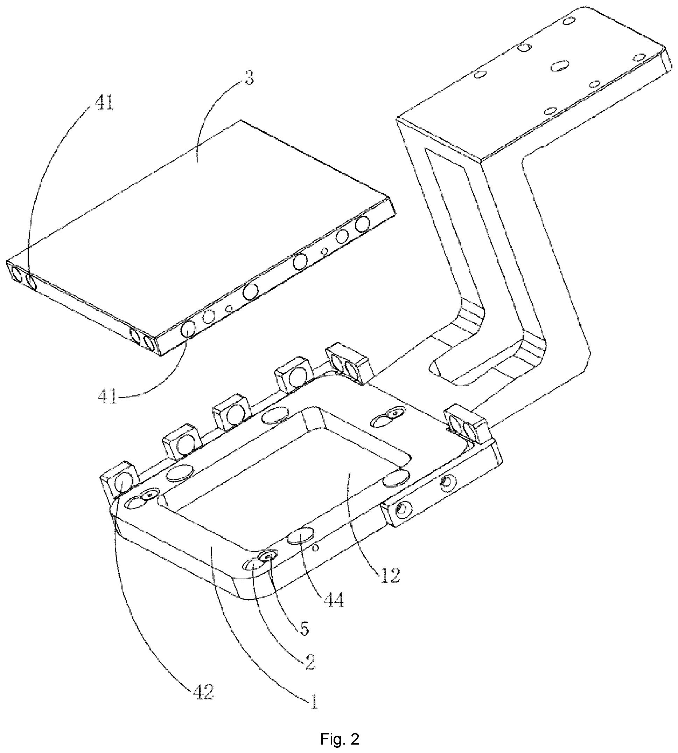

Referring to FIG. 1 and FIG. 2, a first aspect of the present disclosure provides a 3D printing platform. The 3D printing platform includes: a base; at least one support member, the support member is arranged on the base and protrudes out of a top surface of the base, and a top end of the support member forms a support surface; a build platform placed on the support surface; and a platform fixing member configured to detachably connect the build platform to the base.

The 3D printing platform 3 of one embodiment of the present disclosure includes a base 1, at least one support member 2, a build platform 3 and a platform fixing member 4. Wherein, a top end of the support member 2 forms a support surface, and the build platform 3 is placed on the support surface. According to the structure, the support surface formed by the top end of at least one support member can place the build platform. Therefore, the build platform is placed above the base, after the build platform is leveled for the first time, it is unnecessary to be re-leveled when the same build platform is placed on the base again, and it can be directly used, it has high repeatability and interchangeability, making it more convenient to use, time-saving and labor-saving.

Specifically, high repeatability can be understood as follows: the build platform is arranged on the support surface, and after one leveling, the build platform is repeatedly removed and placed without the need for further leveling to achieve the use requirement. High interchangeability can be understood as follows: the build platform can be arranged on the support surface of other 3D printing devices, and after one leveling, the build platform is repeatedly removed and placed without the need for further leveling to achieve the use requirement.

In one embodiment, the 3D printing platform 3 may include at least two staggered support members, and at least two of the support members are in line contact with the build platform, or at least two support members are in line contact and point contact with the build platform. Specifically, the 3D printing platform 3 is in line contact with the support member 2, and it can be understood that a surface of the top end of the support member 2, which is in contact with the build platform 3 is a narrow and elongated, nearly linear structure. For the convenience of description, regions where the two support members 2 in line contact with the build platform 3 are respectively defined as a first-line contact line and a second-line contact line. In order to ensure the stability of placement, at least two of the support members are staggered in position, so that an extension line of the first-line contact line and an extension line of the second-line contact line are not on the same straight line. The extension line of the first-line contact line and the extension line of the second-line contact line can be parallel to each other with a certain distance, or, the extension line of the first-line contact line and the extension line of the second-line contact line can be crossed. In addition, the 3D printing platform 3 is in point contact with the support member 2, and it can be understood that, in naked-eye observation, contact between the build platform 3 and the top end of the support member 2 (e.g., a vertex of a cone), may be seen as surface-to-point contact. In order to ensure the stability of placement, the two support members are staggered in position, when at least two of the support members 2 are in point contact and point contact with the build platform 3, a contact point of the point contact is not an extension line of a line contact line.

In one embodiment, the 3D printing platform may include at least three staggered support members, and at least three of the support members are in point contact with the build platform. Referring to FIG. 2, when there are three support members 2, at least three of the support members are staggered in position, that is, at least one of the three support members 2 is staggered with other support members 2 on a horizontal plane. It can also be understood that at least one support member 2 is not in the same straight line as the other support member 2, whereby top ends of the three support members 2 can form a support surface. According to this structure, the support surface formed by the top ends of at least three staggered support members 2 can be configured for placing the build platform 3. Therefore, the build platform 3 is placed above the base 1 without the need to set a complex mounting structure, so as to reduce contact area of the build platform 3 and the base 1, but also reduce the requirement of processing precision of both the build platform 3 and the base 1.

In one embodiment, each of the support members 2 is a spherical structure. Thus, the spherical support member 2 has equal curvature and surface area in all directions, so that pressure can be uniformly distributed when the build platform 3 is placed on the spherical support member 2, resulting in maintaining structural stability. In addition, a surface of the spherical support member 2 is more smooth, which can also prevent a sharp surface from scratching the build platform 3. In some examples, the spherical support member 2 is a silicon nitride ceramic ball having high strength and abrasion resistance, resulting in providing more stable support for the build platform 3 and having a long service life.

For the convenience of description, the spherical support member 2 is defined as a support sphere, and the highest points of three support spheres can be understood as tangent points of the support spheres. When the build platform 3 is placed on the support surface formed by the three support spheres, contact between the build platform 3 and the support sphere can visually be seen as surface-to-point contact. Therefore, the contact area of the build platform 3 and three support spheres is extremely small, reducing the risk of uneven placement of the build platform 3 due to excessive contact area. In some examples, four support spheres or more support spheres may be provided, depending on the customer's needs. However, in order to ensure that a contact surface between the build platform 3 and the support spheres is as small as possible, three support spheres are preferred.

In other examples, the support member 2 may also be configured as a conical structure, which is defined as a support cone for the convenience of the description. Specifically, there can be three support cones, at least one support cone is staggered with other support cones on a horizontal plane, and a top end for contacting with the build platform 3 is a vertex of the support cone. When the build platform 3 is placed on the support surface formed by the three support cones, contact between the build platform 3 and the support sphere can be seen as surface-to-point contact, resulting in forming a very small contact surface between the build platform 3 and three support cones. It will be understood that a support surface formed by the top ends of the three support spheres or the three support cones is a virtual plane. In addition, in some examples, the support member 2 may also configured as a structure such as a cylinder, and a top surface of the cylinder may also form a support surface.

Of course, in some other examples, the shape of the support member 2 may not be limited to the structures mentioned above, and even the support member 2 may be configured as an irregular shape. Specifically, the support member 2 can be configured into a structure capable of forming a very small contact surface with the build platform 3, and the number of the support members 2 can form a support surface.

In one embodiment, the 3D printing platform 3 includes three support members 2, and the three support members 2 are distributed in axial symmetry. Specifically, distribution positions of the three support members 2 can form at least one axis of symmetry. Therefore, the support member 2 can provide a more uniform support force for the build platform 3, resulting in more stable support.

Referring to FIG. 1, in one embodiment, the build platform 3 is magnetically coupled with the base 1 through a platform fixing member 4. Therefore, when the build platform 3 is placed on the support surface, the platform fixing member 4 can also magnetically attach the build platform 3 to the base 1, so as to fix the build platform 3 to a certain extent.

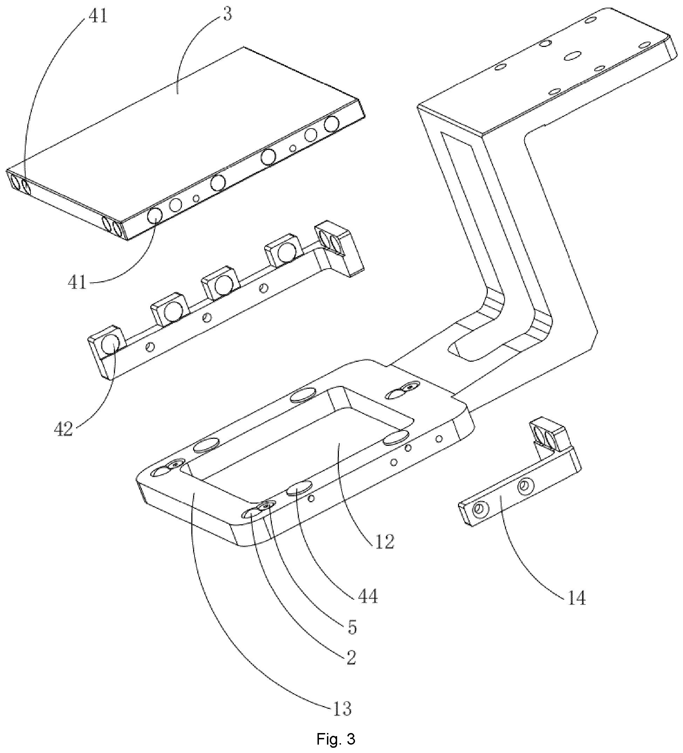

Referring to FIG. 2 and FIG. 3, in one embodiment, the platform fixing member includes a first magnet and a second magnet, the build platform is provided with at least one first magnet in both a X-axis direction and a Y-axis direction, the base is provided with at least one second magnet corresponding to the first magnet in both the X-axis direction and the Y-axis direction. When the build platform is placed on the support surface, the first magnet is magnetically coupled with the second magnet. Specifically, the X-axis direction and the Y-axis direction can be understood as a horizontal direction, and the first magnet 41 and the second magnet 42 make the build platform 3 be subjected to a magnetic force in the horizontal direction, so as to fix the build platform 3 to a certain extent.

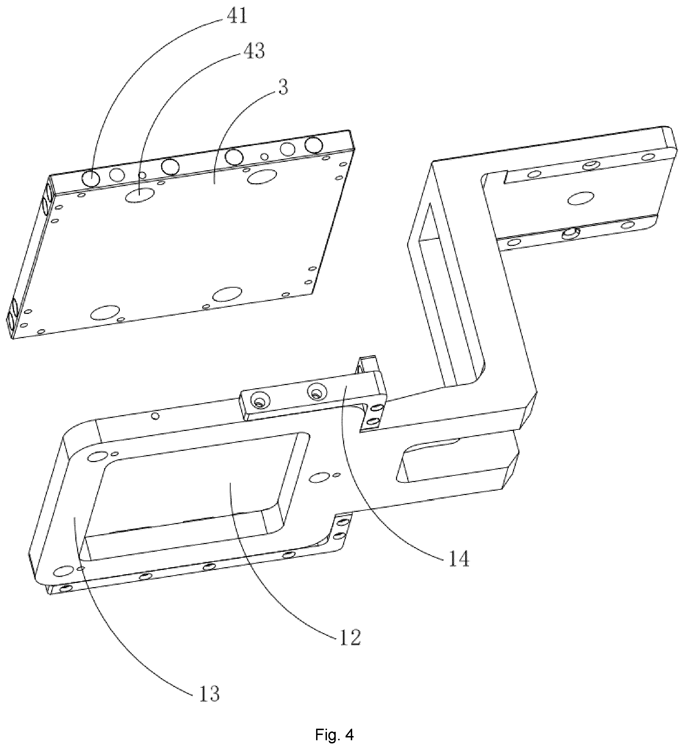

Referring to FIG. 3 and FIG. 4, in one embodiment, the platform fixing member 4 further includes a third magnet 43 and a fourth magnet 44, at least one surface of the build platform 3 in a Z-axis direction is provided with at least one third magnet 43, the top of the base 1 is provided with at least one fourth magnet 44 corresponding to the third magnet 43. When the build platform 3 is placed on the support surface, the third magnet 43 is magnetically coupled with the fourth magnet 44. In a vertical direction, it is also possible to fix the build platform 3 by the third magnet 43 and the fourth magnet 44, thereby reinforcing the connection between the build platform 3 and the base 1. In some embodiments, it is possible to omit the third magnet 43 and fourth magnet 44 in the vertical direction, the build platform 3 can be directly placed on the support surface under the action of gravity.

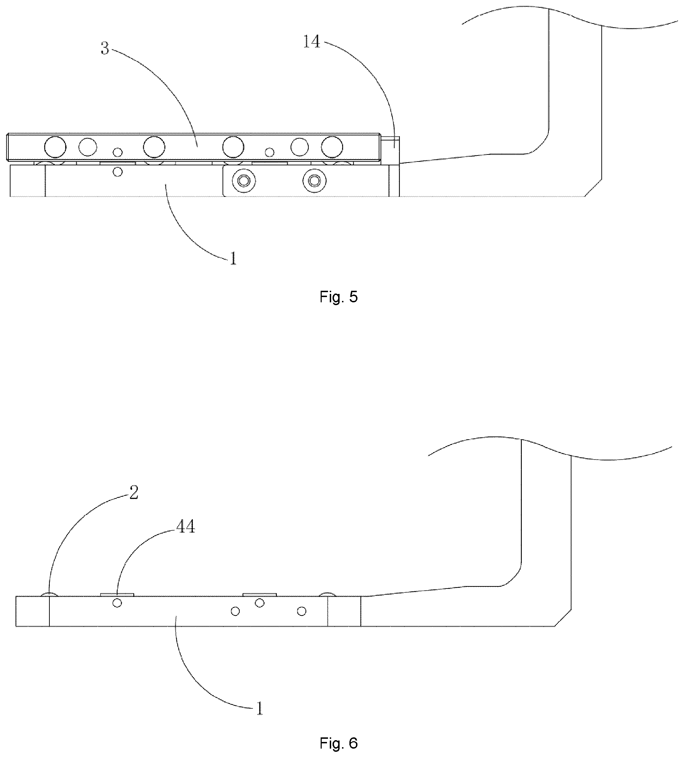

Referring to FIG. 6, in one embodiment, the fourth magnet 44 protrudes from a top surface of the base 1, and a protrusion height of the fourth magnet 44 is less than a height of a highest point of the support member 2. Specifically, a height difference between the protrusion height of the fourth magnet 44 and the height of the highest point of the support member 2 is only a minimal value, so the fourth magnet 44 is not in contact with the build platform 3. When the build platform 3 is placed on the support surface, the third magnet 43 is magnetically coupled with the fourth magnet 44, but the third magnet 43 is not in contact with the fourth magnet 44. Thus, it is possible to avoid increasing contact area of the build platform 3 contacted with the support surface, but also to keep a certain magnetic force between the third magnet 43 and the fourth magnet 44.

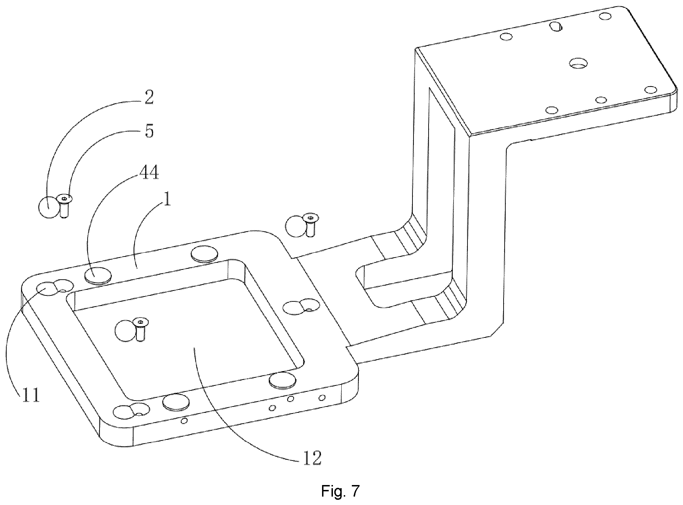

Referring to FIG. 7, in one embodiment, the base 1 is provided with a groove 11, inner profile of the groove 11 is matched with partial outer profile of the support member 2, and the support member 2 is housed in the groove 11. Therefore, when the support member 2 is placed in the groove 11, the groove 11 can limit the support member 2. Specifically, since the support member 2 is protruded from a top surface of the base 1, one part of the support member 2 is located in the groove 11, and the other part is located outside the groove 11. It can be understood that when the support member 2 is a support sphere, the role of the groove 11 is particularly important, and arrangement of the groove 11 prevents the support sphere from rolling laterally.

In one embodiment, in order to reduce processing difficulty, and make a supporting structure matched with the groove without a gap, the groove 11 can be a conical structure, the support member 2 can be a spherical structure.

Referring to FIG. 2, FIG. 3 and FIG. 5, in one embodiment, the 3D printing platform further includes a limiting member 5, the limiting member 5 is connected to the top of the base 1 and is configured to fix the support member 2 in the groove 11. Because the support member 2 is partially located outside the groove 11, the limiting member 5 can prevent the support member 2 from falling out of the groove 11.

Referring to FIG. 7, in one embodiment, the limiting member 5 is a screw. When the screw is in threaded connection with the top of the base 1, a head of the screw is in contact with the outer side of the support member 2 so as to fix the support member 2 between the groove 11 and the head of the screw. Therefore, the screw is detachably connected to the base 1. When it is necessary to replace the support member 2, the screw can be detached to take out an old support member 2. After being placed in a new support member 2, the screw can be in threaded connection with the base 1 once more.

Referring to FIG. 3 and FIG. 4, in one embodiment, the base 1 includes a bottom plate 13 and at least one side plate 14. One side surface of the bottom plate 13 in the X-axis direction is connected with at least one side plate 14, and other side surface of the bottom plate 13 in the Y-axis direction is connected with at least one side plate 14. At least one support member 2 is arranged on the top of the bottom plate 13, and the side plate 14 protrudes from a top surface of the bottom plate 13. The build platform 3 is provided with at least one first magnet 41 in both X-axis direction and Y-axis direction, and at least one second magnet 42 corresponding to the first magnet 41 is arranged on one side of the side plate 14 facing the bottom plate. When the build platform is placed on the support surface, the first magnet is magnetically coupled with the second magnet. Thus, side plates 14 are provided along both the X-axis direction and the X-axis direction, and the side plates 14 protrude from the top surface of the bottom plate. Specifically, when the build platform 3 is placed on the support surface, the side plates 14 can limit the build platform 3 in a transverse direction. In addition, when the build platform 3 is placed on the support surface, the first magnet 41 and the second magnet 42 are coupled to fix the build platform 3 on the support surface, and magnetic structure facilitates easy replacement of build platform 3.

In one embodiment, a distance between a top surface of the side plate 14 and the top surface of the bottom plate is a first distance, a distance between a top surface of the build platform 3 and the top surface of the bottom plate is a second distance, and the first distance is less than the second distance. Therefore, the build platform 3 protrudes more than the side plate 14, which is convenient for the worker to take and place the build platform 3, avoiding interference of the side plate 14.

Referring to FIG. 3 and FIG. 4, in one embodiment, a groove 12 is formed in the middle of the base 1, and an area of the build platform 3 is larger than an area of the groove 12. Thus, the groove 12 can reduce the material required for the production and manufacturing of the base 1, and can reduce its own weight. In addition, the area of the build platform 3 is larger than the area of the groove 12, which can prevent the build platform 3 from falling out of the groove 12.

In one embodiment, the build platform 3 includes a base body first layer and a load-bearing second layer for bearing a printed part. The load-bearing second layer is a diamond-like carbon coating.

In one embodiment, in order to reduce damage to the build platform 3 and improve the quality of the build platform, the build platform further includes an anti-impact third layer arranged on the base body first layer far away from one side of the load-bearing second layer. The anti-impact third layer is a diamond-like carbon coating.

Specifically, the diamond-like carbon coating is arranged on an outer surface of the base body first layer by a process of vapor deposition. For example, the diamond-like carbon coating may be formed on the outer surface of the base body first layer by chemical vapor deposition or physical vapor deposition. The process of vapor deposition is conducive to ensuring the uniformity of the diamond-like carbon coating. Therefore, the diamond-like carbon coating is arranged on the outer surface of the base body first layer, which is beneficial for ensuring that a flatness of the load-bearing second layer or the anti-impact third layer is within an appropriate range, thereby facilitating the improvement of printing precision.

In some embodiments, a hardness of the diamond-like carbon coating is a, 2500 HV < a < 4000 HV. For example, the hardness of the diamond-like carbon coating may be 2500 HV, 3000 HV, 3400 HV, 3700 HV, or 4000 HV. When the hardness of the diamond-like carbon coating meets the above range, it is advantageous to make the diamond-like carbon coating have a suitable hardness to reduce the probability of generating scratches.

In some embodiments, a thickness of the diamond-like carbon coating along a direction from the base body first layer to the diamond-like carbon coating is b, and 4µm ≤ b ≤ 6µm. For example, the thickness b of the diamond-like carbon coating may be 4µm, 4.5µm, 5µm, 5.5µm, or 6µm. By controlling the thickness of the diamond-like carbon coating, it is beneficial to ensure the overall hardness of the diamond-like carbon coating, and control the flatness of the load-bearing second layer and the anti-impact third layer.

In some embodiments, a flatness of the load-bearing second layer or the anti-impact third layer is not greater than 20µm. For example, the flatness of the load-bearing second layer or the anti-impact third layer may be 2µm, 5µm, 8µm, 10µm or 20µm. When the flatness of the load-bearing second layer or the anti-impact third layer meets the above range, it is beneficial for ensuring printing precision and printing quality.

In one example, an outer surface of the base body first layer is a smooth surface, and a roughness Ra ranges from 0.1 to 0.4. It can be understood that the diamond-like carbon coating is directly arranged on the outer surface of the base body first layer. When the surface of the base body first layer is a smooth surface, it is good for ensuring the flatness of the load-bearing second layer and the anti-impact third layer, so it is good for ensuring the printing quality of a printer.

In another example, a surface of the base body first layer is a sandblasted surface, and the roughness Ra ranges from 0.4 to 0.8. Therefore, it is good for improving the bonding force between the diamond-like carbon coating and the base body first layer under the condition that the base body first layer has a certain flatness.

For the convenience of the description, one side of the load-bearing second layer far away from the base body first layer is referred to as a load-bearing plane.

Because the hardness of the diamond-like carbon coating is high, the diamond-like carbon coating is good for reducing the probability of generating scratch on the load-bearing plane, and controlling a depth of the scratch, ensuring the flatness of the load-bearing plane, so as to improve the precision of the 3D printing device 100 and ensure the printing quality of a printed part. Moreover, the diamond-like carbon coating is directly formed on the base body first layer, which not only is good for ensuring the flatness of the build platform 3, but also is good for ensuring a connecting area of the diamond-like carbon coating and the base body first layer, and ensuring the connecting strength between the diamond-like carbon coating and the base body first layer.

In some embodiments, in order to better illustrate the effects of the embodiments of the present disclosure in practical applications, relevant performance tests are performed for different 3D printing platforms. Wherein, a control group: a 3D printing platform without a diamond-like carbon coating, wherein the build platform of the 3D printing platform is provided with a load-bearing plane; an experimental group: the build platform 3 according to any one embodiment of the present disclosure.

### a) Anti-scratch performance comparison

A utility knife is used to scratch the load-bearing planes of both the control group and the experimental group with the same force. Ultimately, under the observation of a microscope, it is easy to leave obvious scratches on the load-bearing plane of the control group, and the load-bearing plane of the experimental group has shallower scratches or has no obvious scratches.

### b) Flatness test

Using the laser to read the flatness of the load-bearing planes of both the control group and the experimental group, it was ultimately found that the difference between the flatness of the load-bearing plane of the control group and the load-bearing plane of the experimental group ranges from -5µm to +5µm, most of the difference ranges from -4.4µm to 1.1µm, it can be seen that the flatness of the load-bearing plane of the experimental group is easy to control, and it is easy to realize the required flatness for printing.

### c) Focus test

Under the same energy intensity, projections are performed on the load-bearing planes of both the control group and the experimental group. It is ultimately found that there are no obvious difference between projection definition of both the control group and the experimental group. Although the image projected onto the load-bearing plane of the experimental group is darker at the same energy intensity, it is also significantly improved after changing the energy intensity of projection.

### d) Adhesion performance test

①Respectively dripping four different resins on the load-bearing plane of the experimental group, wherein the four resins can cure on the load-bearing plane and are adhered to a coating. It can be seen that the printed part can be adhered to the load-bearing plane of the experimental group.
②Printing a printed part with a narrow bottom and a wide top on the load-bearing planes of both the control group and the experimental group. When a thickness and an area of two printed parts contacted with the load-bearing plane are equivalent, the printed part is pulled upwards by a release film, and a maximum height reached by both printed parts is essentially the same before the printed part is separated from a printing platform. Thus, it can be seen that adhesive performance of the load-bearing planes of both the control group and the experimental group is not obviously different.

### e) Sample removal difficulty comparison

On the load-bearing planes of the control group and the experimental group, the printed parts are taken down with the same number of times. The load-bearing plane of the control group is easy to be scratched, and the printed part is difficult to be taken down and easy to be cracked. In contrast, the load-bearing plane of the experimental group has no obvious scratches, and the printed part can still be easy to be taken down with the integrity of the printed part maintained.

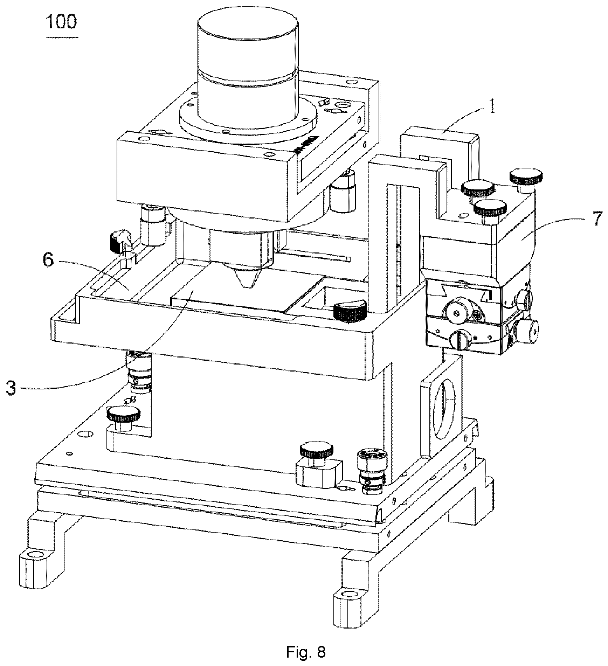

Referring to FIG. 8, a second aspect of the present disclosure provides a 3D printing device 100. The 3D printing device 100 includes: a 3D printing platform as described above; a leveling mechanism 7 configured to connect to the base 1; a liquid groove 6 configured to contain liquid photosensitive material, when the build platform 3 is located in the liquid groove 6, at least part of the base 1 extends to outside of the liquid groove 6 so as to connect to the leveling mechanism 7.

Specifically, the base 1 can be connected to the leveling mechanism 7 by means of snap-fit engagement or fasteners such as screws or bolts. The leveling mechanism 7 can adjust the load-bearing plane to a horizontal state. In addition, the 3D printing device 100 may further include a light source module for irradiating the liquid photosensitive material to cure the liquid photosensitive material on the build platform 3. Wherein the build platform 3 is configured to move relative to the liquid groove 6, and the liquid groove 6 contains liquid photosensitive material. When the load-bearing plane is located in the liquid groove 6, the load-bearing plane is soaked in the liquid photosensitive material. The light source module of the 3D printing device 100 can irradiate to the liquid photosensitive material, so that the liquid photosensitive material can cure on the load-bearing plane to realize printing.

It will be understood that the 3D printing device 100 with the 3D printing platform described above also has its full technical effects. Namely, the 3D printing platform of the present disclosure places the build platform above the base, after the build platform is leveled for the first time, when the build platform is placed on the same build platform again, it does not need to be leveled again when placed, it can be directly used, which has high repeatability and interchangeability, making it more convenient to use, time-saving, and labor-saving.

Although the above description of the present disclosure is illustrated in conjunction with the accompanying drawings and embodiments, it should be understood that the description does not limit the present disclosure in any way. Those ordinarily skilled in the art can make variations and modifications to the present disclosure as desired without departing from the essential spirit and scope of the present disclosure, which fall within the protection scope of the present disclosure.

## Claims

1. A 3D printing platform comprising:
a base (1);
at least one support member (2), the support member (2) is arranged on the base (1) and protrudes out of a top surface of the base (1), and a top end of the support member (2) forms a support surface;
a build platform (3) placed on the support surface (2); and
a platform fixing member (4) configured to detachably connect the build platform (3) to the base (1).

2. The 3D printing platform according to claim 1, wherein the 3D printing platform comprises at least two staggered support members (2), at least two of the support members (2) are in line contact with the build platform (3), or at least two support members (2) are in line contact and point contact with the build platform (3).

3. The 3D printing platform according to claim 1, wherein the 3D printing platform comprises at least three staggered support members (2), at least three of the support members (2) are in point contact with the build platform (3).

4. The 3D printing platform according to claim 3, wherein each of the support members (2) is a spherical structure.

5. The 3D printing platform according to claim 4, wherein the 3D printing platform includes three support members (2), and the three support members (2) are distributed in axial symmetry.

6. The 3D printing platform according to any one of claims 1 to 5, wherein the build platform (3) is magnetically coupled with the base (1) through a platform fixing member (4).

7. The 3D printing platform according to claim 6, wherein the platform fixing member (4) comprises a first magnet (41) and a second magnet (42), the build platform (3) is provided with at least one first magnet (41) in both a X-axis direction and a Y-axis direction, the base (1) is provided with at least one second magnet (42) corresponding to the first magnet (41) in both the X-axis direction and the Y-axis direction;
when the build platform (3) is placed on the support surface, the first magnet (41) is magnetically coupled with the second magnet (42).

8. The 3D printing platform according to claim 6, wherein the platform fixing member (4) further comprises a third magnet (43) and a fourth magnet (44), at least one surface of the build platform (3) in a Z-axis direction is provided with at least one third magnet (43), a top of the base (1) is provided with at least one fourth magnet (44) corresponding to the third magnet (43);
when the build platform (3) is placed on the support surface, the third magnet (43) is magnetically coupled with the fourth magnet (44).

9. The 3D printing platform according to claim 6, wherein the base (1) is provided with a groove (11), inner profile of the groove (11) is matched with partial outer profile of the support member (2), the support member (2) is housed in the groove (11).

10. The 3D printing platform according to claim 9, wherein the groove (11) is a conical structure, the support member (2) can be a spherical structure.

11. The 3D printing platform according to claim 9, wherein the 3D printing platform further comprises a limiting member (5), the limiting member (5) is connected to a top of the base (1) and is configured to fix the support member (2) in the groove (11).

12. The 3D printing platform according to claim 6, wherein the base (1) comprises a bottom plate (13) and at least one side plate (14);
one side surface of the bottom plate (13) in the X-axis direction is connected with at least one side plate (14), and other side surface of the bottom plate (13) in the Y-axis direction is connected with at least one side plate (14), at least one support member (2) is arranged on a top of the bottom plate (13), the side plate (14) protrudes from a top surface of the bottom plate (13);
the build platform (3) is provided with at least one first magnet (41) in both X-axis direction and Y-axis direction, at least one second magnet (42) corresponding to the first magnet (41) is arranged on one side of the side plate (14) facing the bottom plate (13); when the build platform is placed on the support surface, the first magnet (41) is magnetically coupled with the second magnet (42).

13. The 3D printing platform according to any one of claims 1 to 5, wherein the build platform (3) comprises a base body first layer, and a load-bearing second layer for bearing a printed part; the load-bearing second layer is a diamond-like carbon coating.

14. The 3D printing platform according to claim 13, wherein the build platform (3) further includes an anti-impact third layer arranged on the base body first layer far away from one side of the load-bearing second layer, the anti-impact third layer is a diamond-like carbon coating.

15. A 3D printing device comprising: the 3D printing platform according to any one of claims 1 to 13.
